# EUROPÄISCHE PATENTSCHRIFT

(11) **EP 1 182 485 B1**
(45) Veröffentlichungstag und Bekanntmachung des Hinweises auf die Patenterteilung: **05.01.2005**
(21) Anmeldenummer: 01112447.6
(22) Anmeldetag: 22.05.2001
(51) Int. Cl.: G02B 7/02, G03F 7/20, G02B 7/08, G02B 7/182

(54) **Vorrichtung zum Verstellen der Lage zweier Bauelemente zueinander**
Apparatus for adjusting the relative positions of two elements
Dispositif de réglage de la position relative de deux éléments

(30) Priorität: 14.08.2000 DE 10039712
(43) Veröffentlichungstag der Anmeldung: 27.02.2002
(73) Patentinhaber: Carl Zeiss SMT AG, 73447 Oberkochen (DE)
(72) Erfinder: Rau, Johannes, Dipl.-Ing., 89547 Gerstetten (DE)
(74) Vertreter: Lorenz, Werner, Dr.-Ing.

(56) Entgegenhaltungen:
- US-A- 5 376 988
- US-A- 5 822 133
- US-A- 5 986 827

## Beschreibung

Die Erfindung betrifft eine Vorrichtung zum Verstellen der axialen Lage und/oder Kippwinkellage zweier optischer Bauelemente zueinander, nach der im Oberbegriff von Anspruch 1 näher definierten Art.

Aus der US 5,822,133 ist eine Vorrichtung bekannt, welche, insbesondere zur Verbesserung der Abbildungsqualität in einem optischen Objektiv, zwei Bauelemente, insbesondere Trägerelemente für Linsen, entlang einer optischen Achse axial zueinander verschiebt. Die oben genannte Schrift bedient sich dazu mehrerer Aktuatoren, die überwiegend über ein Fluid, also als hydraulische Aktuatoren, bewegt werden können. Dabei beschreibt die Schrift außerdem Anordnungen, bei welchen über symmetrisch zur optischen Achse angeordnete Aktuatoren kleine Manipulationen in der axialen Richtung, also in "Z-Richtung" erreicht werden können. In einzelnen Ausgestaltungen der Erfindung werden dazu insbesondere drei symmetrisch um die optische Achse der jeweiligen Linsen verteilte Mechanismen aus jeweils einem Aktuator, welcher hydraulisch oder piezoelektrisch betätigbar ist, und entsprechende Hebelanordnungen, welche in Form von Festkörpergelenken einstückig aus einem Block gefertigt werden können, angeordnet. Über diesen Aufbau lässt sich eine Z-Manipulation der Linse realisieren.

Durch die Verwendung von drei Aktuatoren wird ein sehr hoher Regelungsaufwand erforderlich. Außerdem entsteht durch die Integration der Aktuatoren zwischen den beiden Bauelementen der Nachteil, dass die gesamte Baueinheit relativ groß wird und, insbesondere um ausreichend große zentrale Öffnungen für die entsprechenden Linsen freizulassen, sowohl in axialer als auch in radialer Richtung einen sehr großen Bauraum erfordert. Die Konstruktion wird dadurch außerdem nur eine geringe Steifigkeit aufweisen.

Die US 5,986,827 beschreibt eine Hub- und Kippvorrichtung für ein Werkstück. Die Hub- und Kippvorrichtung, auch als Aktuator bezeichnet, weist drei identische Federeinheiten, eine Struktur, auf welche die Federeinheiten gelagert sind, und drei Linearaktuatoren auf. Für den Hub- und Kippmechanismus ist ein Innenring, welcher das Werkstück trägt, mit drei sogenannten Bipoden versehen, welche je zwei V-förmig angeordnete Stäbe mit Federgelenken an ihren Enden darstellen, die an einem Ende miteinander verbunden sind und die nur entlang ihrer Längsachse Kräfte übertragen können. Das Ende eines jeden Bipoden, an dem die Stäbe zusammengefügt sind, ist jeweils an einem Hebel befestigt, der drehbar in der Struktur gelagert ist und mit Stellschrauben gegenüber der Struktur fixiert werden kann. Durch Verkippen der jeweiligen Hebel mit den Stellschrauben kann der Innenring mitsamt dem Werkstück sowohl in der Höhe, also in z-Richtung, verstellt als auch verkippt werden.

Nachteilig an der Hub- und Kippvorrichtung ist der sehr große Bauraumbedarf, der sich aus der Trennung aus Bipod und Stellhebel ergibt. Da aus fertigungstechnischen Gründen die Bipoden und die Stellhebel aus verschiedenen Teilen zusammengesetzt werden müssen, müssen die Bipod-Federgelenke auch die zusätzlichen Fertigungs- und Montagetoleranzen ausgleichen, weshalb die Bipoden relativ weich ausgebildet sind, so dass das von ihnen gelagerte Werkstück recht leicht zu unerwünschten Schwingungen angeregt werden kann. Außerdem ist es insbesondere aus dem Bereich der Fotographie bekannt, die axiale Verschiebung von Linsen oder anderen optischen Elementen zueinander dadurch zu realisieren, daß wenigstens eines der Trägerelemente für eine der optischen Linsen oder dergleichen in einem Gewindeelement plaziert ist, und sich so die Variation der Abstände der einzelnen Bauelemente über eine Drehung der einzelnen Bauelemente zueinander realisieren läßt.

Aufgrund der Reibung bei einer derartigen Verstellung des Abstandes von zwei Bauelementen zueinander, sowie einem gegebenenfalls auftretenden Slip-Stick-Effekt kann diese Art der Manipulation lediglich dann verwendet werden, wenn keine großen Genauigkeiten gefragt sind. Die Verwendung für Hochleistungsobjektive, beispielsweise im Bereich der Mikrolithographie, scheidet damit aus.

Es ist Aufgabe der Erfindung, eine Vorrichtung zum Verstellen der Lage zweier Bauelemente zueinander zu schaffen, welche mit einem sehr kompakten und platzsparenden Aufbau ein sehr genaues Verstellen der Lage der beiden Bauelemente zueinander ermöglicht, und welche darüber hinaus sehr steif auszuführen ist.

Erfindungsgemäß wird diese Aufgabe durch die im kennzeichnenden Teil von Anspruch 1 genannten Merkmale gelöst.

Dadurch, daß jedes der Bauelemente über die wenigstens drei Gelenke verfügt, welche ihrerseits über jeweils ein Hebelelement mit jeweils korrespondierenden Gelenken des jeweils anderen Bauelements zu einem Gelenkpaar verbunden sind, läßt sich ein sehr kompakter Aufbau realisieren. Außerdem sind hier lediglich wenigstens sechs Gelenke und wenigstens drei Hebelelemente erforderlich, um die beiden Bauelemente in axialer Richtung zu verbinden. Dieser Aufbau läßt sich bei einer entsprechenden Wahl der Gelenke, hier können beispielsweise sehr steife Festkörpergelenke genutzt werden, einerseits in axialer Richtung sehr platzsparend, andererseits sehr steif realisieren.

Die Hebelelemente der Gelenkpaare sind über jeweils wenigstens einen Hebel und jeweils wenigstens ein weiteres Gelenk mit wenigstens einem benachbarten Hebel wenigstens eines der benachbarten Gelenkpaare verbunden. Durch diese Verbindung wird erreicht, daß die einzelnen Gelenkpaare untereinander direkt korrespondieren.

Beispielsweise bei vier Gelenkpaaren und gleicher Länge der Hebelelemente sowie der Hebel, wie sie sich exemplarisch bei der Anordnung der Gelenkpaare in der Art eines Quadrats ergibt, wobei die weiteren Gelenke dann gegenüber den gedachten Seitenkanten des Quadrats jeweils etwas nach innen verschoben sind, kann eine sehr gleichmäßige Bewegung verwirklicht werden. Die Vorrichtung kann dann über die wenigstens zwei Hebel angesteuert werden, welche untereinander wiederum verbunden sein können und so die Möglichkeit bieten, daß die Vorrichtung in einer sehr günstigen Ausgestaltung mit einem einzigen Aktuator betrieben werden kann.

Dabei können die Hebel je nach vorhandenem Bauraum in radialer Richtung entsprechend weit über die Baueinheit hinaus ragen, so daß durch die sehr langen Hebel, auch bei vergleichsweise kleiner zur Verfügung stehender Kraft, eine sehr steife Ausführung der Gelenke, welche beispielsweise als Festkörpergelenke realisiert werden können, möglich ist, da die an den Hebelelementen angreifenden Kräfte durch die Länge der Hebel entsprechend "verstärkt" sind. Aufgrund der geringen Drehwinkel der einzelnen Hebel und Hebelelemente ergibt sich so eine sehr gute Linearität der gewünschten Bewegung verbunden mit einer sehr kleinen, durch die Hebelelemente der einzelnen Gelenkpaare verursachten, seitlichen Bewegung der Bauelemente.

Dies führt zu dem sehr kompakten und relativ einfachen Aufbau, der aufgrund der sehr langen Hebel und der damit verbundenen Möglichkeit, die entsprechenden Gelenke sehr steif auszuführen, wie bereits erwähnt, eine sehr steife Ausführung der gesamten Vorrichtung zuläßt. Dies wiederum ergibt sehr vorteilhafte Eigenschaften aufgrund der dadurch sehr hohen Eigenfrequenz der Vorrichtung.

Weitere vorteilhafte Ausgestaltungen der Vorrichtung ergeben sich aus den Unteransprüchen und den anhand der Zeichnung nachfolgend dargestellten Ausführungsbeispielen.

Es zeigt:
- Figur 1: eine Vorrichtung zum Verstellen der Lage zweier Bauelemente zueinander in einer dreidimensionalen Darstellung;
- Figur 2: eine Draufsicht auf die Vorrichtung gemäß Figur 1;
- Figur 3: eine Seitenansicht der Vorrichtung gemäß Figur 1;
- Figur 4: eine Seitenansicht der Vorrichtung analog zu Figur 3 in einer alternativen Ausführungsform;
- Figur 5: eine Seitenansicht der Vorrichtung analog zu Figur 3 in einer Ausführungsform zur Einleitung eines Drehmoments mit einem zusätzlichen Hebelelement;
- Figur 6: eine Draufsicht auf die Vorrichtung gemäß dem Pfeil VI in Figur 5;
- Figur 7: eine Ausführungsform einer Vorrichtung mit einer Funktionsweise analog zu Figur 1 in einer dreidimensionalen Darstellung;
- Figur 8: eine Kombination von drei Vorrichtungen in einer schematischen Prinzipdarstellung;
- Figur 9: eine schematische Darstellung einer Ausführungsform der Vorrichtung mit drei Gelenkpaaren;
- Figur 10: eine schematische Darstellung einer alternativen Ausführungsform der Vorrichtung mit drei Gelenkpaaren; und
- Figur 11: eine schematische Darstellung einer weiteren Ausführungsform der Vorrichtung mit zahlreichen Gelenkpaaren.

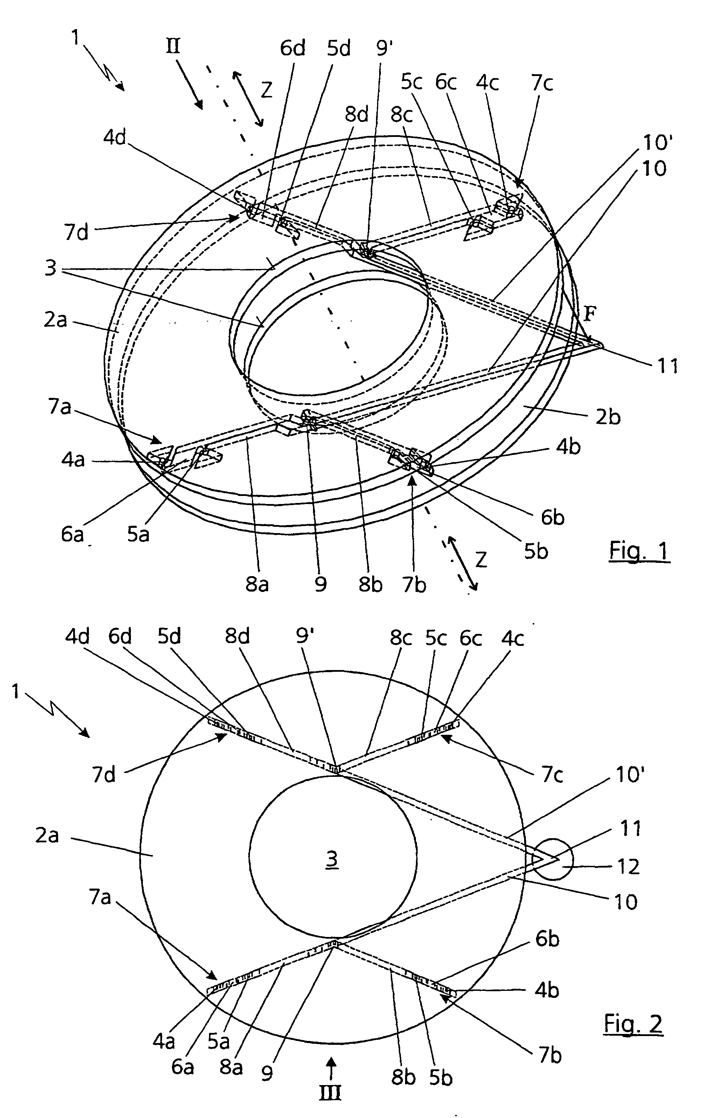

Figur 1 zeigt eine Vorrichtung 1 zum Verstellen der Lage zweier Bauelemente 2a, 2b zueinander. Bei den Bauelementen 2a, 2b kann es sich dabei insbesondere um Trägerelemente für optische Einrichtungen, wie beispielsweise Spiegel oder Linsen, oder um ein Trägerelement für optische Einrichtungen und ein gegebenenfalls auch feststehendes Basiselement handeln. In der hier dargestellten Ausführungsform weisen die Bauelemente 2a, 2b jeweils eine zentrale Bohrung 3 auf. Sie könnten hier als Trägerelemente für Linsen gedacht sein.

Die Vorrichtung 1 soll als Axial- und/oder Winkel-Manipulator für optische Lithographie-Objektive dienen. Es hängt dabei von der genauen Ausführungsform und von der Art der zur Verstellung einwirkenden Kraft ab, insbesondere ob diese als Kraft oder als Drehmoment wirkt, ob die Vorrichtung zur Verstellung des axialen Abstands der beiden Bauelemente 2a, 2b zueinander, also als Axial- bzw. Z-Manipulator, dient, oder ob sie als Winkelmanipulator bzw. Kippmanipulator zum Verstellen der Winkellage der beiden Bauelemente 2a, 2b zueinander Verwendung findet. Dies wird jedoch nachfolgend nochmals eingehend erläutert werden.

Einigen Ausführungsformen ist es gemeinsam, daß jedes der beiden Bauelemente 2a, 2b jeweils vier Gelenke 4a, 4b, 4c, 4d bzw. 5a, 5b, 5c, 5d aufweist. Jedes der Gelenke 4a, 4b, 4c, 4d des einen Bauteils 2a ist über ein Hebelelement 6a, 6b, 6c, 6d mit dem jeweils korrespondierenden Gelenk 5a, 5b, 5c, 5d des jeweils anderen Bauteils 2b verbunden. Diese Kombination aus den jeweils zwei Gelenken 4a und 5a, 4b und 5b, 4c und 5c, 4d und 5d mit dem jeweiligen Hebelelement 6a, 6b, 6c, 6d ergibt dabei jeweils ein Gelenkpaar 7a, 7b, 7c, 7d.

Jedes dieser Gelenkpaare 7a, 7b, 7c, 7d ist über wenigstens einen Hebel 8a, 8b, 8c, 8d und jeweils wenigstens ein weiteres Gelenk 9, 9' mit einem jeweils benachbarten Gelenkpaar 7a, 7b, 7c, 7d verbunden.

In dem in Figur 1 dargestellten Ausführungsbeispiel handelt es sich um eine Vorrichtung 1, welche als Z-Manipulator ausgeführt ist und über eine Krafteinwirkung auf die Hebel 8a, 8b, 8c, 8d betätigt wird. Diese Krafteinwirkung erfolgt dabei über zwei hebelartige Verlängerungen 10, 10', der Hebel 8a und 8d, welche in einem Verbindungspunkt 11 zusammenlaufen. Die Einwirkung einer Kraft F erfolgt dann in dem Verbindungspunkt 11 der hebelartigen Verlängerungen 10, 10' und wird durch die hebelartigen Verlängerungen 10, 10' auf die Hebel 8a und 8d übertragen. Über die weiteren Gelenke 9, 9' erfahren auch die Hebel 8b, 8c eine durch die Kraft F verursachte Bewegung. Da die Hebel 8a, 8b, 8c, 8d jeweils mit den korrespondierenden Hebelelementen 6a, 6b, 6c, 6d verbunden sind, kommt es auch hier zu einer Auslenkung der Hebelelemente 6a, 6b, 6c, 6d durch die Kraft F. Aufgrund der entsprechenden Anordnung der Gelenke 4a, 4b, 4c, 4d und 5a, 5b, 5c, 5d an dem jeweiligen Bauelement 2a, 2b erfolgt dann eine Bewegung der beiden Bauelemente 2a, 2b zueinander.

Sind die Hebelelemente 6a, 6b, 6c, 6d und gegebenenfalls auch die hebelartigen Verlängerungen 10, 10' jeweils untereinander wenigstens annähernd exakt gleich lang, so ergeben ideale Übersetzungsverhältnisse und im Falle eines Z-Manipulators eine exakte Parallelbewegung.

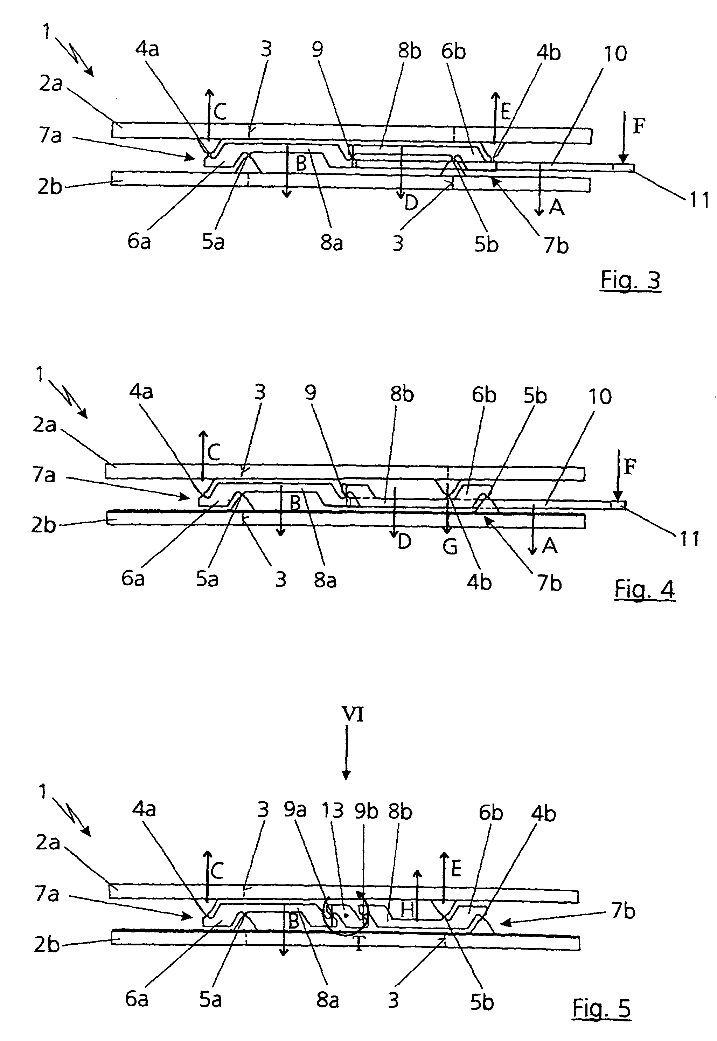

In dem in Figur 1 dargestellten Ausführungsbeispiel wird diese Bewegung eine wenigstens annähernd parallele Bewegung der beiden Bauelemente 2a, 2b zueinander in axialer Richtung bzw. in Z-Richtung bewirken. Auf den genauen Mechanismus und die damit verbundenen Möglichkeiten zum Verstellen der Lage der beiden Bauelemente 2a, 2b zueinander wird im weiteren Verlauf des Ausführungsbeispiels, insbesondere in Figur 3 bis Figur 5 nochmals näher eingegangen.

Figur 2 zeigt nun eine Draufsicht gemäß dem Pfeil II in Figur 1 auf die Vorrichtung 1 zum Verstellen der axialen Lage der beiden Bauelemente 2a, 2b zueinander. Dabei ist in Figur 2 ein für die Funktionsweise der Vorrichtung 1 idealer Aufbau gezeigt, bei dem die Gelenke 4a, 5a, das weitere Gelenk 9 und der Verbindungspunkt 11 sowie die Gelenke 4d, 5d, das weitere Gelenk 9' und der Verbindungspunkt 11 jeweils in einer Flucht angeordnet sind. Durch die Krafteinwirkung in dem Verbindungspunkt 11 läßt sich so eine ideale Ansteuerung der Vorrichtung 1 erreichen. Das Verstellen der Lage der beiden Bauelemente 2a, 2b zueinander kann dabei über einen einzigen, die Kraft F aufbringenden, hier nur prinzipmäßig angedeuteten, Aktuator 12, welcher beispielsweise als elektromagnetisches Element, hydraulisches Element oder als Piezoelement ausgeführt sein kann, erfolgen.

Die Vorrichtung 1 ist mittels Festkörpergelenken als Gelenke 4a, 4b, 4c, 4d und 5a, 5b, 5c, 5d sowie 9 und 9' ausgeführt. Dies erlaubt es, die gesamte Vorrichtung mit Ausnahme des Verbindungspunktes 11 im Bereich der hebelartigen Verlängerungen 10, 10' monolithisch auszuführen. Dies bedeutet, daß die gesamte Vorrichtung 1 aus einem Teil hergestellt werden kann, wobei sich als Herstellungsverfahren hier eine Kombination von spanender Bearbeitung und einer Bearbeitung mittels Erosion anbietet. Aufgrund der vergleichsweise langen hebelartigen Verlängerungen 10, 10' läßt sich dabei ein vergleichsweise großes Übersetzungsverhältnis von der Bewegung des Verbindungspunktes 11 bzw. des Aktuators 12 zur Bewegung der einzelnen Gelenke 4a, 4b, 4c, 4d und 5a, 5b, 5c, 5d realisieren. Dies bedeutet einerseits, daß über den vergleichsweise großen Weg und eine relativ kleine Kraft F am Verbindungspunkt 11 eine kleine Bewegung der einzelnen Gelenke 4a, 4b, 4c, 4d und 5a, 5b, 5c, 5d bzw. der Bauelemente 2a, 2b zueinander realisiert werden kann, was wiederum eine Verbesserung der Genauigkeit der Bewegung der beiden Bauelemente 2a, 2b zueinander gegenüber der zu erreichbaren Auflösung bzw. Genauigkeit der Bewegung des in dem Verbindungspunkt 11 die Kraft F aufbringenden Aktuators 12 erlaubt. Außerdem ist man deshalb in der Lage, die als Festkörpergelenke ausgeführten Gelenke 4a, 4b, 4c, 4d; 5a, 5b, 5c, 5d sowie 9 und 9' sehr steif auszuführen, da aufgrund der vergleichsweise langen Hebellänge der hebelartigen Verlängerungen 10, 10' eine vergleichsweise kleine Kraft F in dem Verbindungspunkt 11 ausreicht, um die sehr steifen Festkörpergelenke zu bewegen. Dies wiederum erlaubt es, die gesamte Vorrichtung 1 sehr steif auszuführen und eine entsprechend hohe Eigenfrequenz der Vorrichtung 1 zu realisieren. Eine eventuell auftretende minimale Veränderung der Lage der beiden Bauelemente 2a, 2b zueinander, durch äußere Krafteinwirkungen und unerwünschte Schwingungen, kann damit verringert werden.

Aufgrund der sehr langen möglichen Ausführung der hebelartigen Verlängerungen 10, 10' wird ein Drehwinkel der Gelenke bei gegebenem Weg des Aktuators sehr klein. Dadurch entspricht die gewünschte Z-Bewegung, welche durch den Sinus dieses Drehwinkels beschrieben wird, also annähernd dem Drehwinkel selbst. Die unerwünschte Bewegung quer dazu wird durch den Cosinus beschrieben, sie bleibt unter den genannten Bedingungen damit sehr klein.

Neben der hier dargestellten Anordnung der hebelartigen Verlängerungen 10, 10' in einer Flucht zu den Gelenken 4a, 5a und 9 bzw. 4d, 5d und 9' sind selbstverständlich auch andere Ausführungsformen denkbar. Die hebelartigen Verlängerungen 10, 10' können dann über einen weiteren Querhebel oder dergleichen (nicht dargestellt) verbunden werden. Allerdings nimmt man damit zusätzliche Biegemomente oder dergleichen in Kauf, welche die zu erzielende Genauigkeit der Vorrichtung gegebenenfalls verringern können. Prinzipiell wäre es auch denkbar, an jede der hebelartigen Verlängerungen 10, 10' einen eigenen Aktuator 12 zur Erzeugung der erforderlichen Kraft F anzuordnen. Der Aufbau mit nur einem einzigen Aktuator, welcher in einem Verbindungspunkt 11 oder gegebenenfalls auch über weitere Hebelelemente indirekt an diesem Verbindungspunkt 11 angreift, erspart jedoch den Regelungsaufwand zwischen mehreren Aktuatoren.

Es ergibt sich eine Platzeinsparung und eine Vereinfachung in der Regelung/Steuerung der Vorrichtung 1 durch die Verwendung lediglich eines einzigen Aktuators 12.

Neben der hier angesprochenen monolithischen Bauweise der Vorrichtung 1 ist auch eine teilweise monolithische Ausführung der Vorrichtung 1 denkbar, so daß diese sich beispielsweise aus wenigstens zwei monolithisch gefertigten Teilen zusammensetzen könnte. Außerdem läßt sich durch eine Variation der Lage der einzelnen Gelenkpaare 7a, 7b, 7c, 7d zueinander und durch den Verlauf der hebelartigen Verlängerungen 10, 10' eine Anordnung erreichen, bei der die zentrale Öffnung 3 entsprechend größer ausgeführt werden kann, sofern die eingesetzten optischen Elemente, beispielsweise Linsen dies erforderlich machen. Aufgrund der zu erzielenden Steifigkeit bei bereits vergleichsweise klein ausgeführten Festkörpergelenken stellt dies kein Problem dar. Andererseits kann bei einem Einsatz von optischen Elementen, welche als Reflektoren wirken, also beispielsweise Spiegelelemente oder dergleichen, auf die zentrale Öffnung 3 gänzlich verzichtet werden, was bei der Anordnung der Gelenke 4a, 4b, 4c, 4d und 5a, 5b, 5c, 5d sowie der Hebel 8a, 8b, 8c, 8d eine zusätzliche Flexibilität erlaubt.

Figur 3 zeigt nun die Vorrichtung 1 als Z-Manipulator in einer Seitenansicht gemäß dem Pfeil III in Figur 2. Die einzelnen Elemente liegen dabei teilweise deckungsgleich hintereinander, so daß in Figur 3, so wie auch in den nachfolgenden Figuren, jeweils nur die entsprechend sichtbaren Elemente bezeichnet sind, obwohl der sichtbar dargestellte Aufbau doppelt vorhanden ist.

In Figur 3 dient die Vorrichtung 1 zur Z-Manipulation der beiden Bauelemente 2a, 2b. In dem Verbindungspunkt 11 wirkt die Kraft F, welche die hebelartige Verlängerung 10 im dargestellten Ausführungsbeispiel nach unten auslenkt. Die Kraft F oder zumindest eine ihrer Kraftkomponenten wirkt dabei in die Richtung der gewünschten Manipulation.

Durch die Kraft F wird nun also, wie bereits erwähnt, die hebelartige Verlängerung 10 gemäß dem Pfeil A nach unten ausgelenkt. Dies bewirkt eine ebenfalls nach unten gerichtete Auslenkung des Hebels 8a gemäß dem Pfeil B. Aufgrund der durch den Hebel 8a verursachten Drehung des Hebelelementes 6a und des Hebels 8a um das Gelenk 5a kommt es zu einer Bewegung des Gelenks 4a gemäß dem Pfeil C nach oben. Gleichzeitig wird über das weitere Gelenk 9 der Hebel 8b gemäß dem Pfeil D ebenfalls nach unten gezogen. Auch hier kommt es zu einer Drehung des Hebels 8b und des Hebelelements 6b um das Gelenk 5b. Das Gelenk 4b wird dementsprechend gemäß dem Pfeil E nach oben bewegt. Durch die Einwirkung der Kraft F in der hier dargestellten Richtung auf den Verbindungspunkt 11 kommt es also zu einer Relativbewegung der beiden Bauelemente 2a, 2b zueinander. In dem hier dargestellten Ausführungsbeispiel wird diese Relativbewegung als ein paralleles Entfernen der beiden Bauelemente 2a, 2b zueinander erfolgen. Selbstverständlich ist es bei einer umgekehrt wirkenden Kraft F auch möglich, die beiden Bauelemente aufeinander zuzubewegen.

In Figur 4 ist eine prinzipiell vergleichbare Seitenansicht der Vorrichtung 1 in einer Ausführungsform als Kipp- bzw. Winkelmanipulator erkennbar. Hierbei ist lediglich die Anordnung der Gelenke 4b und 5b zueinander verändert worden. Dies gilt selbstverständlich auch für die hier nicht erkennbaren, dekkungsgleich hinter den Gelenken 4b und 5b angeordneten Gelenke 4c und 5c. Dabei sind die dem Bauelement 2a zuzuordnenden Gelenke 4a, 4b in Bezug auf das weitere Gelenk 9 in der jeweils gleichen Richtung gegenüber den dem Bauelement 2b zugeordneten Gelenken 5a, 5b angeordnet. Dies bedeutet, daß gegenüber Figur 3, hier sind die dem Bauelement 2a zugeordneten Gelenke aus Sicht des weiteren Gelenks 9 jeweils außen angeordnet, die Gelenke 4a, 4b in Figur 4 jeweils links angeordnet sind.

Bei einer gleichen Wirkungsweise, also einer Krafteinwirkung von oben auf den Verbindungspunkt 11 kommt es damit auch wieder zu einer Auslenkung der hebelartigen Verlängerung 10 gemäß dem Pfeil A nach unten. Auch dies bewirkt wiederum eine Auslenkung des Hebels 8a nach unten, welche in der oben bereits beschriebenen Art eine Auslenkung des Gelenks 4a gemäß dem Pfeil C nach oben bewirkt. Auch das Hebelelement 8b wird analog zu der in Figur 3 erläuterten Bewegung, gemäß dem Pfeil D, nach unten ausgelenkt. Durch die veränderte Anordnung der Gelenke 4b, 5b des Gelenkpaars 7b kommt es hier jedoch zu einer Drehung des Hebels 8b und des Hebelelements 6b um das Gelenk 5b in der Art, daß hier das Gelenk 4b gemäß dem Pfeil G nach unten ausgelenkt wird.

Als Resultat einer Krafteinwirkung auf den Verbindungspunkt 11 bei der in Figur 4 dargestellten Anordnung der Gelenke 4b, 5b des Gelenkpaares 7b kommt es also zu einer Kippbewegung, bzw. Winkel-Manipulation der beiden Bauelemente 2a, 2b zueinander.

Figur 5 zeigt eine weitere Ansteuermöglichkeit einer derartigen Vorrichtung 1 zur Manipulation der beiden Bauelemente 2a, 2b mittels eines Drehmoments T zueinander. Das weitere Gelenk 9 ist hierbei in zwei einzelne Gelenkpunkte 9a, 9b aufgeteilt. Selbstverständlich gilt dies analog für das weitere Gelenk 9', welches ebenfalls zwei in Gelenkpunkte 9a' und 9b' (hier nicht erkennbar) aufgeteilt ist. Diese beiden Gelenkpunkte zwischen den Hebeln 8a, 8b sind über einen Zwischenhebel 13 bzw. einen verdeckt dahinter angeordneten Zwischenhebel 13' verbunden. Im Bereich des weiteren Gelenks 9', welches hier verdeckt ist, wirkt ein Drehmoment T als Torsionsmoment, um den Bereich der Gelenke 9, 9' auf die Zwischenhebel 13, 13'.

Aufgrund dieses Drehmoments T, welches in dem hier dargestellten Ausführungsbeispiel entgegen dem Uhrzeigersinn wirkt, selbstverständlich jedoch analog den oben beschriebenen Kräften F zur Veränderung der Richtung der Manipulation auch entgegengesetzt wirken kann, kommt es zu einer Bewegung des Hebels 8a gemäß dem Pfeil B nach unten. Diese Bewegung des Hebels 8a, gemäß dem Pfeil B nach unten, bewirkt in der bereits bekannten Weise eine Bewegung des Gelenks 4a gemäß dem Pfeil C nach oben. Außerdem kommt es durch das Drehmoment T zu einer Bewegung des Hebels 8b gemäß dem Pfeil H nach oben. Dadurch wird der Hebel 8b zusammen mit dem Hebelelement 6b in der Art um das Gelenk 4b bewegt, daß es zu einer Bewegung des Gelenks 5b gemäß dem Pfeil E nach oben kommt. Der Aufbau gemäß Figur 5, welcher mit der Anordnung seiner Gelenke 4a, 4b an dem Bauelement 2a im Verhältnis zu den Gelenken 5a, 5b an dem Bauelement 2b analog zu dem Ausführungsbeispiel in Figur 4 aufgebaut ist, bewirkt also bei der Verwendung mit dem Drehmoment T eine Parallelverschiebung der beiden Bauelemente 2a, 2b zueinander und kann dementsprechend als Z-Manipulator genutzt werden.

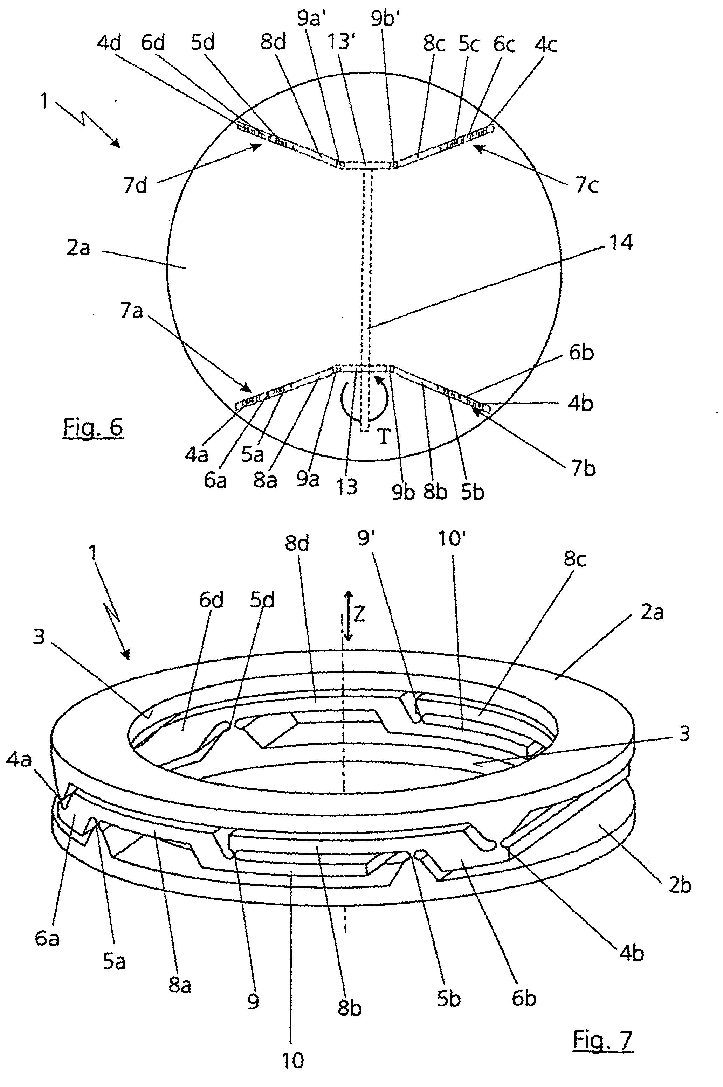

Figur 6 zeigt nun in einer weiteren Draufsicht auf die Vorrichtung 1, in einer Darstellung analog zu Figur 2, eine Möglichkeit, das Drehmoment T gleichmäßig auf die beiden Gelenke 9, 9' einwirken zu lassen. Dazu bedient man sich in dem hier dargestellten Ausführungsbeispiel einer Achse 14, welche die beiden weiteren Gelenke 9, 9' miteinander verbindet. Selbstverständlich ist ein derartiger Aufbau nur bei einem optisch nicht durchlässigen optischen Element auf dem Bauelement. 2a bzw. den Bauelementen 2a, 2b denkbar, da die Achse 14 für eine ideale Funktionsweise ansonsten im Bereich der zentralen Öffnungen 3 verlaufen würde.

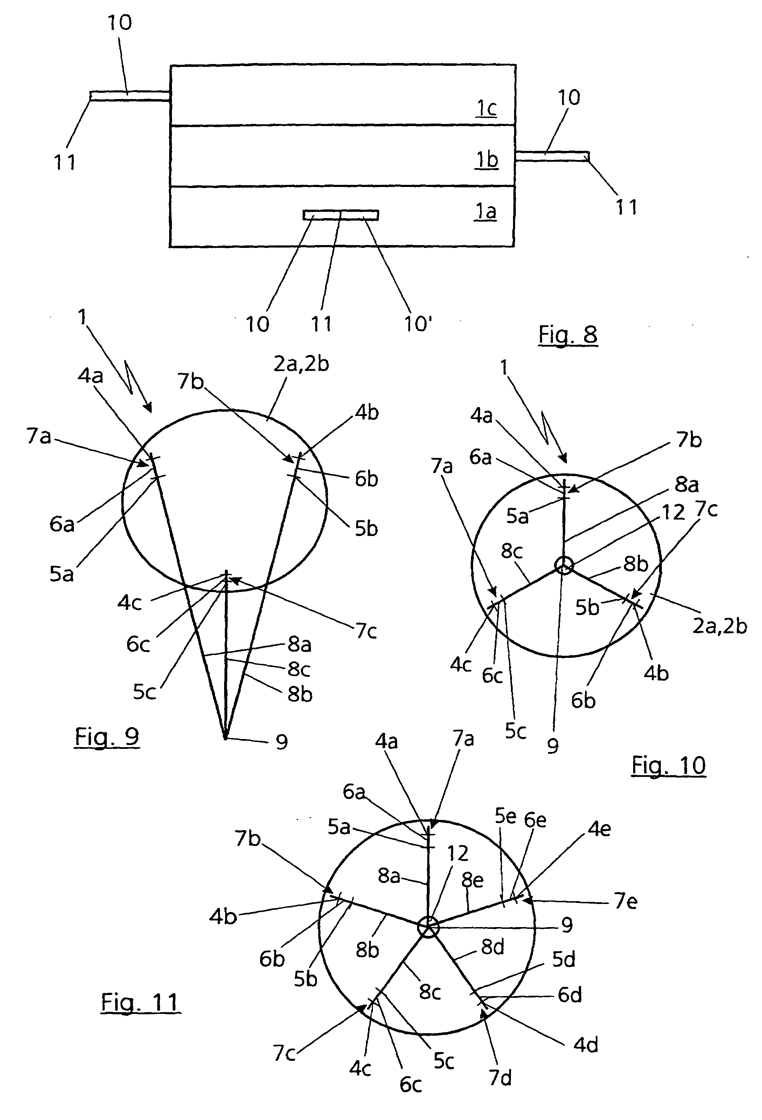

Figur 7 zeigt ein weiteres Ausführungsbeispiel der Vorrichtung 1, welche hier als ein über eine Krafteinwirkung betriebener Z-Manipulator dargestellt ist. Dieser Z-Manipulator erlaubt eine zentrale Öffnung 3 mit einem sehr großen Öffnungsdurchmesser. Es wird damit ein sehr kompakter Aufbau der Vorrichtung 1 zur Z-Manipulation der beiden Bauelemente 2a, 2b zueinander erreicht. Da die Gelenke 4a, 4b, 4c, 4d, 5a, 5b, 5c, 5d sowie 9 und 9' als vergleichsweise breite Festkörpergelenke ausgebildet sind, erzielt die Vorrichtung 1 gemäß dem Ausführungsbeispiel in Figur 9 neben einer sehr großen Kompaktheit auch eine sehr große Steifigkeit.

Figur 8 zeigt einen schematischen Aufbau, welcher es ermöglicht, hier mittels drei der Vorrichtungen 1 eine sehr flexible Möglichkeit der Manipulation zu realisieren. Dabei sind hier drei der Vorrichtungen 1 übereinander angeordnet, welche jeweils über eine Krafteinwirkung in den hebelartigen Verlängerungen 10, 10', bzw. den Verbindungspunkten 11 betätigt werden. Dabei ist eine erste Vorrichtung 1a als Z-Manipulator ausgebildet. Auf dieser Vorrichtung 1a ist eine weitere Vorrichtung 1b angeordnet, welche als Winkelmanipulator ausgebildet ist. Eine dritte Vorrichtung 1c, welche auf der Vorrichtung 1b angeordnet ist, ist ebenfalls als Winkelmanipulator ausgebildet und dabei in einem um wenigstens annähernd 90° verdrehten Aufbau zu der Vorrichtung 1a angeordnet. Prinzipiell sind natürlich auch alle anderen von 0° bzw. 180° verschiedenen Winkel denkbar, bei einer Drehung um ca. 90° können die Winkel in beiden Richtungen jedoch unabhängig voneinander eingestellt werden.

Mit einem derartigen "Stack" von drei Vorrichtungen 1a, 1b, 1c läßt sich so über jeweils wenigstens einen einzigen Aktuator 12 (hier nicht dargestellt) eine Manipulation der beiden äußersten Bauelemente des Stacks in sämtlichen Winkellagen und axialen Abständen realisieren. Selbstverständlich sind hierbei auch andere Anordnungen denkbar.

Figur 9 zeigt eine Ausführungsform der Vorrichtung 1 in einer stark schematisierten Darstellung mit drei Gelenkpaaren 7a, 7b, 7c, drei Helbelelementen 6a, 6b, 6c und drei Hebeln 8a, 8b, 8c. Die drei Hebel 8a, 8b, 8c laufen dabei in einem Gelenk 9 zusammen, welches in diesem Fall außerhalb der beiden Trägerelemente 2a, 2b angeordnet ist. Ein hier nicht dargestellter Aktuator 12 kann dann direkt oder über weitere Hebelelemente in dem Bereich des weiteren Gelenks 9 angreifen, um die beiden Trägerelemente 2a, 2b gegeneinander zu bewegen. Aufgrund der unterschiedlichen Hebellängen zwischen den beiden hier gleich lang ausgeführten Hebeln 8a, 8b und dem kürzeren Hebel 8c ist es erforderlich, daß sich die Länge der Hebelelemente 6a, 6b und 6c entsprechend diesen Längen der Hebel 8a und 8b bzw. 8c anpassen, um weiterhin für eine parallele Bewegung der beiden Trägerelemente 2a, 2b zueinander zu sorgen. Selbstverständlich wäre auch hier eine Kippbewegung denkbar, da auch hier die Gelenke 4a, 4b, 4c und 5a, 5b, 5c jeweils entsprechend der bereits erläuterten Ausführungsbeispielen angeordnet werden könnten. Der Aufbau gemäß Figur 9 erfordert zur Realisierung einer beispielsweise parallelen Bewegung einen etwas höheren Fertigungsaufwand, da die Übersetzungsverhältnisse der einzelnen Hebel 8a, 8b, 8c und Hebelelmente 6a, 6b, 6c entsprechend exakt angepaßt werden müssen. Allerdings erhält man durch die drei Berührungspunkte zwischen den beiden Trägerelementen 2a, 2b, an den drei Gelenkpaaren 7a, 7b, 7c ein statisch bestimmtes System mit den entsprechenden, günstigen Auswirkungen.

Auch Figur 10 zeigt einen entsprechenden Aufbau mit drei Gelenkpaaren 7a, 7b, 7c in einer ebenfalls sehr stark schematisierten Darstellung. Hierbei laufen die drei Hebel 8a, 8b, 8c im Bereich der optischen Achse bzw. Z-Achse zusammen. Dieser Aufbau erlaubt es wiederum drei entsprechend gleichartig ausgebildete Hebel zu verwenden, um die Parallelbewegung zu realisieren. Der Fertigungsaufwand kann bei einem weiterhin statisch bestimmten System damit reduziert werden. Aufgrund der Anordnung des Gelenks 9 und des im Bereich des im Gelenks 9 angeordneten Aktuators 12 bietet sich dieser Aufbau insbesondere zur Manipulation eines optisch nicht durchlässigen Elements, beispielsweise eines Spiegels, an, welcher auf seinem Trägerelement 2a gegenüber einem Basiselement bzw. Trägerelement 2b in seiner axialen Lage manipuliert werden soll.

Figur 11 zeigt einen vergleichbaren Aufbau zu dem in Figur 10, wobei hier anstatt der drei Gelenkpaare 7a, 7b, 7c aus Figur 10 fünf Gelenkpaare 7a, 7b, 7c, 7d, 7e mit ihren entsprechenden Hebeln 8a, 8b, 8c, 8d, 8e in dem Gelenk 9 im Bereich des Aktuators 12 zusammenlaufen.

## Patentansprüche

1. Vorrichtung (1) zum Verstellen der axialen Lage und/oder Kippwinkellage zweier optischer Bauelemente (2a,2b) zueinander, insbesondere zweier Trägerelemente für optische Elemente, wie Spiegel oder Linsen, insbesondere als Axialund/oder Winkel-Manipulator für Lithographie-Objektive, wobei die Bauelemente (2a,2b) eine gemeinsame optische Achse (z-Achse) aufweisen und über eine Krafteinwirkung (F,T) zueinander verstellbar sind, **dadurch gekennzeichnet, dass** jedes der Bauelemente (2a,2b) wenigstens drei Gelenke (4a,4b,4c,4d; 5a,5b,5c,5b) aufweist, wobei jedes der Gelenke (4a,4b,4c, 4d) des einen Bauelements (2a) über jeweils ein Hebelelement (6a,6b,6c,6d) mit jeweils einem korrespondierenden Gelenk (5a,5b,5c,5b) des jeweils anderen Bauelements (2b) zu einem Gelenkpaar (7a,7b,7c,7d) verbunden ist, wobei jedes der Gelenkpaare (7a,7b,7c,7d) über jeweils wenigstens einen Hebel (8a,8b,8c,8d,13,13') und jeweils wenigstens ein weiteres Gelenk (9,9';9a,9b,9a',9b') mit dem wenigstens einen Hebel (8a,8b,8c,8d,13,13') wenigstens eines der benachbarten Gelenkpaare (7a,7b,7c,7d) verbunden ist.

2. Vorrichtung nach Anspruch 1, **dadurch gekennzeichnet, dass** die Krafteinwirkung im Bereich der Hebel (8a,8b,8c,8d,13, 13') vorgesehen ist.

3. Vorrichtung nach Anspruch 1, **dadurch gekennzeichnet, dass** die Krafteinwirkung an wenigstens einer hebelartigen Verlängerung (10,10') vorgesehen ist.

4. Vorrichtung nach Anspruch 1, **dadurch gekennzeichnet, dass** die Krafteinwirkung in Form eines Drehmoments (T) im Bereich des wenigstens einen weiteren Gelenks (9,9';9a,9b, 9a',9b') vorgesehen ist.

5. Vorrichtung nach Anspruch 4, **dadurch gekennzeichnet, dass** die weiteren Gelenke (9,9';9a,9b,9a',9b') über eine Achse (14) miteinander verbunden sind, wobei das Drehmoment (T) als Torsionsmoment auf die Achse (14) wirkt.

6. Vorrichtung nach einem der Ansprüche 1 bis 5, **dadurch gekennzeichnet, dass** die Gelenke (4a,4b,4c,4d;5a,5b,5c,5d;9, 9';9a,9b,9a',9b') als Festkörpergelenke ausgebildet sind.

7. Vorrichtung nach einem der Ansprüche 1 bis 6, **dadurch gekennzeichnet, dass** die Gelenkpaare (7a,7b,7c,7d), die Hebel (8a,8b,8c,8d), die Bauelemente (2a,2b) und gegebenenfalls die hebelartigen Verlängerungen (10,10') zumindest teilweise monolithisch ausgebildet sind.

8. Vorrichtung nach einem der Ansprüche 1 bis 7, **dadurch gekennzeichnet, dass** die Krafteinwirkung von einem einzigen Aktuator (12) ausgeht.

9. Vorrichtung nach Anspruch 8, **dadurch gekennzeichnet, dass** der Aktuator (12) wenigstens annähernd im Bereich der Z-Achse (Z) angeordnet ist.

10. Vorrichtung nach einem der Ansprüche 1 bis 9, **dadurch gekennzeichnet, dass** die Gelenke (4a,4b,4c,4d;5a,5b,5c,5d) jedes der Gelenkpaare (7a,7b,7c,7d) so angeordnet sind, dass die an dem einen Bauelement (2b) befindlichen Gelenke (5a, 5b,5c,5d) jedes der Gelenkpaare (7a,7b,7c,7c) auf der dem wenigstens einen weiteren Gelenk (9,9';9a,9b,9a',9b') zugewandten Seite des Gelenkpaares (7a,7b,7c,7d) angeordnet sind, wobei die auf dem anderen Bauelement (2a) befindlichen Gelenke (4a,4b,4c,4d) des jeweiligen Gelenkpaares (7a, 7b,7c,7d) auf der dem wenigstens einen weiteren Gelenk (9, 9';9a,9b,9a',9b') abgewandten Seite des Gelenkpaares (7a, 7b,7c,7c) angeordnet sind.

11. Vorrichtung nach einem der Ansprüche 1 bis 9, **dadurch gekennzeichnet, dass** die Gelenke (4a,4b,4c,4d;5a,5b,5c,5d) jedes der Gelenkpaare (7a,7b,7c,7d) so angeordnet sind, dass die an dem einen Bauelement (2b) befindlichen Gelenke (5a, 5b,5c,5d) jedes der Gelenkpaare (7a,7b,7c,7d) auf der bezüglich des wenigstens einen weiteren Gelenks (9,9';9a,9b, 9a',9b') gleichen Seite des Gelenkpaares (7a,7b,7c, 7d) angeordnet sind, wobei die auf dem anderen Bauelement (2a) befindlichen Gelenke (4a,4b,4c,4d) des jeweiligen Gelenkpaares (7a,7b,7c,7d) auf der bezüglich des wenigstens einen weiteren Gelenks (9,9';9a,9b,9a',9b') anderen Seite des Gelenkpaares (7a,7b,7c,7c) angeordnet sind.

12. Vorrichtung nach einem der Ansprüche 1 bis 11, **dadurch gekennzeichnet, dass** sie als Z-Manipulator zum parallelen Verstellen des axialen Abstandes der Bauelemente (2a,2b) ausgebildet ist.

13. Vorrichtung nach einem der Ansprüche 1 bis 12, **dadurch gekennzeichnet, dass** die Hebelelemente (6a,6b,6c,6d) nahezu exakt gleich lang ausgebildet sind.

14. Vorrichtung nach einem der Ansprüche 1 bis 13, **dadurch gekennzeichnet, dass** die Hebel (8a,8b,8c,8d) nahezu exakt gleich lang ausgebildet sind.

15. Vorrichtung nach einem der Ansprüche 1 bis 11, **dadurch gekennzeichnet, dass** sie als Kipp-Manipulator zum Verstellen der Winkellage der Bauelemente (2a,2b) zueinander ausgebildet ist.

16. Vorrichtung nach Anspruch 15, **dadurch gekennzeichnet, dass** die Hebelelemente (6a,6b,6c,6d) und die Hebel (8a,8b,8c,8d, 13,13') in ihrer Länge so aufeinander abgestimmt sind, dass sich die eine Kippachse des Kipp-Manipulators mit der Z-Achse (Z) schneidet.

17. Vorrichtung nach einem der Ansprüche 1 bis 16, **dadurch gekennzeichnet, dass** mehrere der Vorrichtungen (1a,1b,1c) in axialer Richtung übereinander angeordnet sind, wobei wenigstens eine der Vorrichtungen (1c) in einem von 0° und von 180° abweichenden Winkel um die Z-Achse (Z) gedreht angeordnet ist.

18. Vorrichtung nach Anspruch 17, **dadurch gekennzeichnet, dass** die wenigstens eine der Vorrichtungen (1c) in einem Winkel von wenigstens annähernd 90° um die Z-Achse (Z) gedreht angeordnet ist.

## Claims

1. A device (1) for adjusting the axial position and/or the tilt angle position of two optical components (2a, 2b) in relation to one another, in particular two carrier elements for optical elements such as mirrors or lenses, in particular in the form of axial and/or angular manipulators for lithographic lenses, in which the components (2a, 2b) have a common optical axis (z axis) and are adjustable in relation to one another by way of the action of a force (F, T), **characterised in that** each of the components (2a, 2b) has at least three articulations (4a, 4b, 4c, 4d; 5a, 5b, 5c, 5b), with each of the articulations (4a, 4b, 4c, 4d) of the one component (2a) being connected by way of a respective lever element (6a, 6b, 6c, 6d) to a respective corresponding articulation (5a, 5b, 5c, 5b) of the respectively other component (2b) to form a pair (7a, 7b, 7c, 7d) of articulations, with each of the pairs (7a, 7b, 7c, 7d) of articulations being connected by way of in each case at least one lever (8a, 8b, 8c, 8d, 13, 13') and in each case at least one further articulation (9, 9'; 9a, 9b, 9a', 9b') to the at least one lever (8a, 8b, 8c, 8d, 13, 13') of at least one of the adjacent pairs (7a, 7b, 7c, 7d) of articulations.

2. A device according to Claim 1, **characterised in that** the action of the force is provided in the region of the levers (8a, 8b, 8c, 8d, 13, 13').

3. A device according to Claim 1, **characterised in that** the action of the force is provided at at least one lever-type extension (10, 10').

4. A device according to Claim 1, **characterised in that** the action of the force is provided in the form of a torque (T) in the region of the at least one further articulation (9, 9'; 9a, 9b, 9a', 9b').

5. A device according to Claim 4, **characterised in that** the further articulations (9, 9'; 9a, 9b, 9a', 9b') are connected to one another by way of a pin (14), with the torque (T) acting on the pin (14) as a torsional moment.

6. A device according to one of Claims 1 to 5, **characterised in that** the articulations (4a, 4b, 4c, 4d; 5a, 5b, 5c, 5d; 9, 9'; 9a, 9b, 9a', 9b') are in the form of solid-state articulations.

7. A device according to one of Claims 1 to 6, **characterised in that** the pairs (7a, 7b, 7c, 7d) of articulations, the levers (8a, 8b, 8c, 8d), the components (2a, 2b) and where applicable the lever-type extensions (10, 10') are in at least partially monolithic form.

8. A device according to one of Claims 1 to 7, **characterised in that** the action of the force comes from a single actuator (12).

9. A device according to Claim 8, **characterised in that** the actuator (12) is arranged at least approximately in the region of the Z axis (Z).

10. A device according to one of Claims 1 to 9, **characterised in that** the articulations (4a, 4b, 4c, 4d; 5a, 5b, 5c, 5d) of each of the pairs (7a, 7b, 7c, 7d) of articulations are arranged such that the articulations (5a, 5b, 5c, 5d) of each of the pairs (7a, 7b, 7c, 7c) of articulations located on the one component (2b) are arranged on that side of the pair (7a, 7b, 7c, 7d) of articulations facing the at least one further articulation (9, 9'; 9a, 9b, 9a', 9b'), with the articulations (4a, 4b, 4c, 4d) of the respective pair (7a, 7b, 7c, 7d) of articulations located on the other component (2a) being arranged on that side of the pair (7a, 7b, 7c, 7c) of articulations remote from the at least one further articulation (9, 9'; 9a, 9b, 9a', 9b').

11. A device according to one of Claims 1 to 9, **characterised in that** the articulations (4a, 4b, 4c, 4d; 5a, 5b, 5c, 5d) of each of the pairs (7a, 7b, 7c, 7d) of articulations are arranged such that the articulations (5a, 5b, 5c, 5d) of each of the pairs (7a, 7b, 7c, 7c) of articulations located on the one component (2b) are arranged on the same side of the pair (7a, 7b, 7c, 7d) of articulations as the at least one further articulation (9, 9'; 9a, 9b, 9a', 9b'), with the articulations (4a, 4b, 4c, 4d) of the respective pair (7a, 7b, 7c, 7d) of articulations located on the other component (2a) being arranged on the other side of the pair (7a, 7b, 7c, 7c) of articulations from that with the at least one further articulation (9, 9'; 9a, 9b, 9a', 9b').

12. A device according to one of Claims 1 to 11, **characterised in that** it is in the form of a Z manipulator for the parallel adjustment of the axial spacing between the components (2a, 2b).

13. A device according to one of Claims 1 to 12, **characterised in that** the lever elements (6a, 6b, 6c, 6d) are in a form having almost exactly the same length.

14. A device according to one of Claims 1 to 13, **characterised in that** the levers (8a, 8b, 8c, 8d) are in a form having almost exactly the same length.

15. A device according to one of Claims 1 to 11, **characterised in that** it is in the form of a tilt manipulator for adjusting the angular position of the components (2a, 2b) in relation to one another.

16. A device according to Claim 15, **characterised in that** the lever elements (6a, 6b, 6c, 6d) and the levers (8a, 8b, 8c, 8d, 13, 13') are matched to one another in their length such that the one tilt axis of the tilt manipulator intersects with the Z axis (Z).

17. A device according to one of Claims 1 to 16, **characterised in that** a plurality of devices (1a, 1b, 1c) are arranged one above the other in the axial direction, with at least one of the devices (1c) being arranged turned about the Z axis (Z) by an angle other than 0° or 180°.

18. A device according to Claim 17, **characterised in that** the at least one of the devices (1c) is arranged turned about the Z axis (Z) by an angle of at least approximately 90°.

## Revendications

1. Dispositif (1) pour régler la position axiale et/ou la position angulaire d'inclinaison de deux éléments optiques (2a, 2b) l'un par rapport à l'autre, en particulier de deux éléments de support pour des éléments optiques tels que des miroirs ou des lentilles, en particulier comme manipulateur axial et/ou angulaire pour objectifs de lithographie, dans lequel les éléments (2a, 2b) comportent un axe optique commun (axe z) et peuvent être déplacés l'un par rapport à l'autre au moyen d'une action de force (F, T), **caractérisé en ce que** chacun des éléments (2a, 2b) comporte au moins trois articulations (4a, 4b, 4c, 4d; 5a, 5b, 5c, 5b), chacune des articulations (4a, 4b, 4c, 4d) d'un élément donné (2a) étant reliée, par l'intermédiaire d'un élément de levier (6a, 6b, 6c, 6d), à une articulation correspondante (5a, 5b, 5c, 5b) de l'autre élément (2b) pour former une paire d'articulations (7a, 7b, 7c, 7d), chacune des paires d'articulations (7a, 7b, 7c, 7d) étant reliée, chacune par l'intermédiaire d'au moins un levier (8a, 8b, 8c, 8d, 13, 13') et à chaque fois par au moins une autre articulation (9, 9'; 9a, 9b, 9a', 9b'), au au moins un levier (8a, 8b, 8c, 8d, 13, 13') d'au moins une des paires d'articulations voisines (7a, 7b, 7c, 7d).

2. Dispositif selon la revendication 1, **caractérisé en ce que** l'action de force est prévue dans la région des leviers (8a, 8b, 8c, 8d, 13, 13').

3. Dispositif selon la revendication 1, **caractérisé en ce que** l'action de force est prévue sur au moins un prolongement (10, 10') en forme de levier.

4. Dispositif selon la revendication 1, **caractérisé en ce que** l'action de force est prévue sous la forme d'un couple (T) dans la région de la au moins une autre articulation (9, 9'; 9a, 9b, 9a', 9b').

5. Dispositif selon la revendication 4, **caractérisé en ce que** les autres articulations (9, 9'; 9a, 9b, 9a', 9b') sont reliées entre elles par l'intermédiaire d'un axe (14), le couple (T) agissant alors sur l'axe (14) en tant que couple de torsion.

6. Dispositif selon l'une des revendications 1 à 5, **caractérisé en ce que** les articulations (4a, 4b, 4c, 4d; 5a, 5b, 5c, 5d; 9, 9'; 9a, 9b, 9a', 9b') sont constituées par des articulations à corps rigides.

7. Dispositif selon l'une des revendications 1 à 6, **caractérisé en ce que** les paires d'articulations (7a, 7b, 7c, 7d), les leviers (8a, 8b, 8c, 8d), les éléments (2a, 2b) et éventuellement les prolongements en forme de leviers (10,10') sont au moins en partie monolithiques.

8. Dispositif selon l'une des revendications 1 à 7, **caractérisé en ce que** l'action de force est issue d'un actionneur unique (12).

9. Dispositif selon la revendication 8, **caractérisé en ce que** l'actionneur (12) est disposé au moins approximativement dans la région de l'axe z (Z).

10. Dispositif selon l'une des revendications 1 à 9, **caractérisé en ce que** les articulations (4a, 4b, 4c, 4d; 5a, 5b, 5c, 5d) de chacune des paires d'articulations (7a, 7b, 7c, 7d) sont disposées de manière que les articulations (5a, 5b, 5c, 5d) de chacune des paires d'articulations (7a, 7b, 7c, 7d) qui se trouvent sur un élément donné (2b) soient disposées sur le côté de la paire d'articulations (7a, 7b, 7c, 7d) qui est dirigée vers le au moins une autre articulation (9, 9'; 9a, 9b, 9a', 9b'), les articulations (4a, 4b, 4c, 4d) de la paire d'articulations (7a, 7b, 7c, 7d) concernée qui se trouvent sur l'autre élément (2a) étant disposées sur le côté de la paire d'articulations (7a, 7b, 7c, 7d) qui est éloignée de la au moins une autre articulation (9, 9 ; 9a, 9b, 9a', 9b').

11. Dispositif selon l'une des revendications 1 à 9, **caractérisé en ce que** les articulations (4a, 4b, 4c, 4d; 5a, 5b, 5c, 5d) de chacune des paires d'articulations (7a, 7b, 7c, 7d) sont disposées de manière que les articulations (5a, 5b, 5c, 5d) de chacune des paires d'articulations (7a, 7b, 7c, 7d) qui se trouvent sur un élément donné (2b) soient disposées sur le même côté de la paire d'articulations (7a, 7b, 7c, 7d) que la au moins une autre articulation (9, 9'; 9a, 9b, 9a', 9b'), les articulations (4a, 4b, 4c, 4d) de la paire d'articulations (7a, 7b, 7c, 7d) concernée qui se trouvent sur l'autre élément (2a) étant disposées sur l'autre côté de la paire d'articulations (7a, 7b, 7c, 7c) par rapport à la au moins une autre articulation (9, 9'; 9a, 9b, 9a', 9b').

12. Dispositif selon l'une des revendications 1 à 11, **caractérisé en ce qu'**il constitue un manipulateur Z destiné au réglage parallèle de la distance d'écartement axial des éléments (2a, 2b).

13. Dispositif selon l'une des revendications 1 à 12, **caractérisé en ce que** les éléments de leviers (6a, 6b, 6c, 6d) sont presque exactement de même longueur.

14. Dispositif selon l'une des revendications 1 à 13, **caractérisé en ce que** les leviers (8a, 8b, 8c, 8d) sont presque exactement de même longueur.

15. Dispositif selon l'une des revendications 1 à 11, **caractérisé en ce qu'**il constitue un manipulateur d'inclinaison servant à régler la position angulaire des éléments (2a, 2b) l'un par rapport à l'autre.

16. Dispositif selon la revendication 15, **caractérisé en ce que** les éléments de leviers (6a, 6b, 6c, 6d) et les leviers (8a, 8b, 8c, 8d, 13, 13') sont adaptés entre eux par leur longueur de manière qu'un axe d'inclinaison du manipulateur d'inclinaison coupe l'axe z (Z).

17. Dispositif selon l'une des revendications 1 à 16, **caractérisé en ce que** plusieurs des dispositifs (1a, 1b, 1c) sont disposés l'un au-dessus de l'autre dans la direction axiale, au moins un des dispositifs (1c) étant tourné autour de l'axe z (Z) d'un angle différent de 0° degré et de 180°.

18. Dispositif selon la revendication 17, **caractérisé en ce que** le au moins un des dispositifs (1c) est tourné autour de l'axe z (Z) d'un angle d'au moins approximativement 90°.
